# EUROPEAN PATENT APPLICATION

(11) **EP 4 620 544 A1**
(43) Date of publication of application: **24.09.2025**
(21) Application number: 25161938.3
(22) Date of filing: 05.03.2025
(51) Int. Cl.: A63F 13/52, G06T 1/20, G06T 15/00, G06T 15/80, G06F 9/44

(54) **GRAPHICS PROCESSING SYSTEM AND METHOD**

(30) Priority: 20.03.2024 GB 202404025
(71) Applicant: Sony Interactive Entertainment Inc., Tokyo 108-0075 (JP)
(72) Inventor: CERRATO, Maurizio, London, W1F 7LP (GB)
(74) Representative: Gill Jennings & Every LLP

(57) **Abstract**

A computer implemented method for rendering graphics data in a video gaming system comprising a GPU, the method comprising: determining a task-specific shader required for rendering a first graphical component within a scene to be rendered; rendering the first component of the graphics data with a multi-purpose shader stored in a shader memory usable by the GPU, the multi-purpose shader configured for rendering a plurality of different graphical components; while rendering with the multi-purpose shader, loading the task-specific shader into the shader memory; when the task-specific shader has loaded, resuming rendering of the first graphical component within the scene with the task-specific shader. Using the method, performance issues associated with loading required shaders at run time are mitigated since the multi-purpose shader may be used for rendering graphical components while a required task-specific shader is loaded

## Description

### FIELD OF THE INVENTION

The present invention is in the field of video gaming systems and relates to methods for rendering graphics data.

### BACKGROUND

The development of modern video games has seen continuous advances in the complexity and realism of the graphics, driven by ongoing improvements in hardware, software and rendering techniques. These advances have enabled developers to create increasingly immersive and visually striking gaming experiences. However, this has also resulted in the increasing implications of a number of challenges in the graphics processing pipeline.

A typical game requires a large variety of different types of graphical elements and rendering techniques. These are implemented using shader programs run at GPU, which are responsible for the different rendering processes within the graphics rendering pipeline. The huge range of different rendering functions required poses challenges in how best to implement the shaders required to provide the range of processing techniques. In one approach large "uber-shaders" can be used, which are able to render lots of different types of data. However, these types of large shader are typically slow to run, particularly when they involve dynamic branches, and they do not make most efficient use of the capacity of the GPU. The preference is therefore generally towards a larger number of smaller task-specific shaders, that are each responsible for a narrower range of processing tasks, such as rendering a particular material, or lighting effect.

An issue with using a large number of task-specific shaders is that a huge number are required to render any one particular scene. Depending on the type of video gaming system, these shaders may be required to be compiled at run time, or precompiled for use. When they are compiled at run time there can be significant performance impact, as there are delays in rendering while the correct shaders are compiled for use, which can result in stuttering in the gameplay. Even where the shaders are pre-compiled, for example in the context of video game consoles, handling such a large number of shaders presents challenges. In particular, it may still not be possible to have all required shaders loaded for a particular scene and therefore the required shaders have to be loaded from the drive into a GPU memory for use by the GPU, when required. Accordingly, even though the shaders do not have to be compiled at run time, when there are a large number of task-specific shaders required, there are still performance issues when loading the required shaders during gameplay.

There is accordingly a need for a method that overcomes these issues, and provides greater flexibility in the deployment of shaders, allowing a greater range of task specific shaders to be used while minimizing detrimental effects on performance.

### SUMMARY OF INVENTION

In a first aspect of the invention there is provided a computer implemented method for rendering graphics data on a video gaming system comprising a GPU, the method comprising: determining a task-specific shader required for rendering a first graphical component within a scene to be rendered; rendering the first component of the graphics data with a multi-purpose shader stored in a shader memory usable by the GPU, the multi-purpose shader configured for rendering a plurality of different graphical components; while rendering with the multi-purpose shader, loading the task-specific shader into the shader memory; when the task-specific shader has loaded, resuming rendering of the first graphical component within the scene with the task-specific shader.

In this way, performance issues associated with loading required shaders at run time are mitigated since the multi-purpose shader may be used for rendering graphical components while a required task-specific shader is loaded. Unlike in the prior art, where if a required shader is not present in the GPU memory there may be stuttering or other performance issues while the shader is loaded, in the present invention frames can continued to be rendered, with the graphical component rendered by the multi-purpose shader, while the task-specific shader is loaded, after which rendering can resume with the task-specific shader. Since the multi-purpose shader can render a wide range of different graphical components, it can be used in a wide range of different scenarios. Although such a multi-purpose or "uber-shader" can result in reduced performance of the GPU, it may be used only briefly, for example for a few frames, while the task-specific shader is loading. Given the failure to render frames completely is much more noticeable and detrimental to gameplay than rendering those frames at a reduced quality relative to a task-specific shader, the present method overall maintains a greater level of performance and user experience level than prior art methods of waiting until the correct shader is loaded before resuming rendering.

A graphical component may comprise the output of a particular rendering task or process. In particular the step of determining a task-specific shader for rendering a first graphical component within a scene to be rendered may also be defined as determining a task-specific shader for performing a rendering task required to provide a graphical component within a scene to be rendered. Equally the step of "rendering the first component of the graphics data with a multi-purpose shader stored in a shader memory usable by the GPU, the multi-purpose shader configured for rendering a plurality of different graphical components" may be defined as "rendering the first component of the graphics data with a multi-purpose shader stored in a shader memory usable by the GPU, the multi-purpose shader configured for a plurality of different rendering tasks.

The shader memory comprises a memory usable by the GPU. It may be comprise a cache or GPU memory, such as a VRAM memory. A multipurpose shader is a shader that is configured for rendering a greater number of graphical components than a task-specific shader. A multi-purpose shader may be an "uber-shader". The task-specific shader may be referred to as a specialised shader.

Preferably the method comprises performing a check to determine when the task-specific shader has loaded and switching from rendering with the multi-purpose shader to rendering with the task-specific shader when it is determined that the task-specific shader is loaded into the shader memory. By continuously monitoring whether the task-specific shader has loaded, the number of frames rendered with the multi-purpose shader may be kept to a minimum.

Preferably, after determining the task-specific shader required for rendering the first graphical component, the method comprises: performing a check to determine whether the task-specific shader is present within the shader memory usable by the GPU; determining that the task-specific shader is not present and, in response, initiating loading of the task-specific shader into the shader memory. This allows for an initial check to determine whether the required task-specific shader is present and the task-specific shader to be loaded only if it is not present.

In some examples, the method may be implemented such only the multi-purpose shader is stored in the shader memory initially (on initialisation of the GPU or loading of the video game or section of the video game) with the task-specific shaders loaded when required based on gameplay. In particular, when a scene to be rendered is determined, the task-specific shaders required for rendering graphical components within the scene are retrieved. In other examples, one or more expected task-specific shaders are loaded into the shader memory initially, for example on initialisation of the video game or loading of a particular video game area. After determining a first graphical component in a scene to be rendered, the method comprises performing a check to determine whether the task-specific shader is present in the shader memory. When the task-specific shader is present the method comprises rendering the first graphical object with the task-specific shader. When it is determined that the task-specific shader is not present the method comprises rendering the first graphical component with the multi-purpose shader and, during before and/or during rendering with the multi-purpose shader loading the task-specific shader into the shader memory. In this way, the fall-back option of the multi-purpose shader is only deployed when required to reduce the impact on performance when the required specialised shader is not present.

In some examples, after use the task-specific shader is retained in the shader memory.

Preferably the multi-purpose shader is configured for a greater number of rendering tasks than the task-specific shader. The multi-purpose may be configured to perform a greater range of rendering tasks, but at a slower rendering speed relative to the task-specific shader.

Preferably the task-specific shader is configured for rendering a particular graphical object type, material type, lighting condition type and/or post processing effect type. The task specific shader also may be configured for providing an animation task, such as handling the position of moving particles, moving the limbs of animated characters, handling soft body deformations.

The multi-purpose shader is preferably configured for rendering a plurality of graphical object types, material types, lighting condition and/or effect types.

The multi-purpose shader may be configured to provide dynamic switching between variables or parameters. The task-specific shader may have fixed variables or parameters.

The graphical component may comprise one or more of: a virtual object type, a material property, a lighting technique, a post processing effect. The graphical component may be comprise a particular variation of a graphical object type. For example the graphical component may be a post-processing effect provided with a particular parameter. For example the graphical component may be a post-processing effect with a given kernel size. In these examples the multipurpose shader may be configured for rendering the graphical component with different values of the parameter, for example for rendering at different selected kernel sizes.

The multipurpose shader may comprise a shader program with a plurality of branches for rendering different components of graphics data. In particular, each branch may provide a different rendering technique or may be suitable for rendering a different graphical component. The branch may be selected based on condition information input into the multi-purpose shader.

The multipurpose shader may comprise a shader program with a plurality of dynamic branches allowing for the multi-purpose shader to be dynamically configured at runtime. In particular, a branch may be selected at runtime to provide a particular rendering technique or rendering of a particular graphical component type.

The multi-purpose shader may be configured to provide a plurality of rendering techniques or for rendering a plurality of different graphical components for a specific video games. The multi-purpose shader may be configured to provide rendering of n graphical components appearing most frequently in a particular video game. The multi-purpose shader has a larger file size than the task-specific shader.

Preferably the method comprises loading the task-specific shader comprises retrieving the task-specific shader from a storage memory and loading into the shader memory usable by the GPU. The storage memory may be disk memory, or a remote storage memory or cloud storage.

In some examples loading the task-specific shader comprises compiling the task-specific shader while rendering with the multi-purpose shader. In some examples, shaders may be compiled at run time. In these examples, the method may comprises compiling a shader from shader code with the CPU and loading into the shader memory for use by the GPU.

Compiling the task-specific shader may comprise retrieving shader code for the task-specific shader from storage; compiling the shader code into machine code executable by the GPU. This may be performed at runtime during gameplay.

Preferably the method comprises performing a compensation technique to compensate for a reduced performance of the GPU when rendering with the multi-purpose shader.

In one example, the method comprises: rendering one or more frames at a first resolution when rendering with the multi-purpose shader; and rendering one or more frames at a second resolution when rendering with the task-specific shader, where the second resolution is greater than the first resolution. By rendering at a lower resolution when rendering frames using the multi-purpose shader, the impact on GPU performance associated with using a large shader program is reduced.

The method may comprise performing dynamic resolution when rendering with the multi-purpose shader. The method may comprise, when rendering with the multi-purpose shader: monitoring the frame rate and adjusting the resolution to change the frame rate to approach a target frame rate. In some examples, one or more additional parameters may be monitored and the resolution adapted in response. The one or more additional parameters may comprise one or more of a scene complexity, a GPU performance metric such as load on the GPU.

The method preferably comprises applying frame blending when switching between rendering with the multi-purpose shader and the task-specific shader. The method may also comprise applying frame blending when processing frames with the multi-purpose shader.

The method preferably comprises: blending a first frame rendered using the multi-purpose shader and a second frame rendered using the task-specific shader to generate a blended frame; displaying the blended frame when transitioning between using the multi-purpose shader and the task-specific shader. In this way, the transition between frames using different shaders is less noticeable to the user and overall gameplay experience is enhanced.

In some examples, the method comprises: rendering the first graphical component with a first level of detail with the multi-purpose shader; and rendering the first graphical component with a second level of detail with the task-specific shader, where the second level of detail is greater than the first level of detail. In this way, the performance impact on the GPU or using a large shader is mitigated, since a reduced level of detail results in reduced strain on the GPU when rendering with the multi-purpose shader.

In some examples, the task specific shader is configured for rendering a post processing effect at a required kernel size and the multipurpose shader is configured for rendering the postprocessing effect at a plurality different kernel sizes. In this example a graphical component can be considered a postprocessing effect rendered with a particular kernel size. In particular the multipurpose shader may be configured to provide dynamic adjustment of kernel size, whereas the task-specific shader renders at a single selected kernel size. In this way, a dynamic kernel size shader could be used while the specific kernel size shader is loading.

In another aspect of the invention there is provided a non-transitory storage medium comprising instructions that when executed by a processor cause the processor to perform the method of any preceding claim.

In another aspect of the invention there is provided a computer program comprising that when executed by a processor cause the processor to perform the method of any preceding claim.

In another aspect of the invention there is provided a video game system comprising a processor configured to: determine a task-specific shader required for rendering a first graphical component within a scene to be rendered; render the first component of the graphics data with a multi-purpose shader stored in a shader memory usable by a GPU, the multi-purpose shader configured for rendering a plurality of different graphical components; while rendering with the multi-purpose shader, load the task-specific shader into the shader memory; when the task-specific shader has loaded, resume rendering of the first graphical component within the scene with the task-specific shader.

### BRIEF DESCRIPTION OF DRAWINGS

Figure 1 illustrates a method flow diagram of a method according to the present invention;
Figure 2 illustrates a video gaming system according to the present invention;

### DETAILED DESCRIPTION

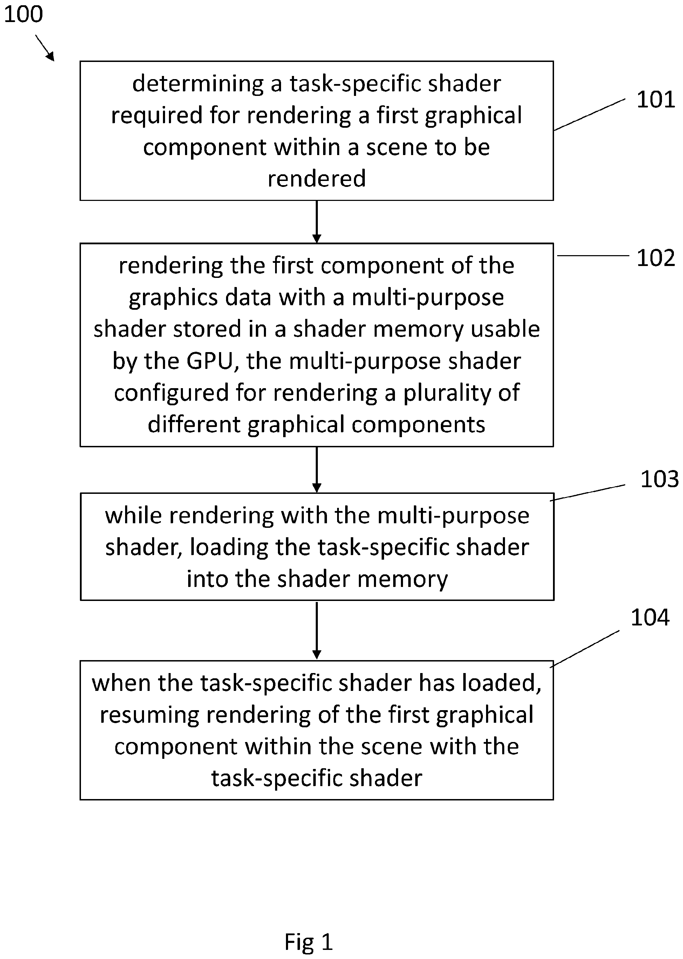

Figure 1 shows a flow diagram corresponding to a computer implemented method for rendering graphics data on a video gaming system comprising a GPU according to the present invention. The method comprises a first step 101 of determining a task-specific shader required for rendering the first graphical component within the scene to be rendered. The second step 102 comprises rendering the first component of the graphics data with a multi-purpose shader stored in a shader memory usable by the GPU, the multi-purpose shader configured for rendering a plurality of different graphical components. The method then comprises a step 103 of, while rendering the multi-purpose shader, loading the task-specific shader into the shader memory and subsequently a step 104 of, when the task-specific shader has loaded, resuming rendering of the first graphical component within the scene with the task-specific shader.

Many modern computer games comprise a large number of different graphical components such as different virtual objects, materials, lighting effects that may be present in a scene. Often, these differing graphical components require different rendering processes to be applied. Generally, to provide these rendering processes the graphics rendering pipeline requires a specific, specialised shader to be applied to render each graphical component. As examples, a videogame may comprise a metal shader for rendering metal objects, a skin shader for rendering the skin of characters, a ground shader for rendering the ground, a water shader for rendering water, glow shaders for rendering special glow effects, light emitter shaders for it shading street lamps for example, and so on. This creates a challenge in that a large number of specific shaders must be ready and usable for the GPU for anyone seen within the video game.

Different video gaming systems approach this challenge different ways. Shaders have to be compiled based on the specific hardware, drivers and parameters of the system being used for rendering the graphics data. In the case of PCs there are a huge range of different combinations of these components that may be used for playing any particular a video game. In view of this, the compiled shaders can't be shipped with the video game but must be compiled on the system at runtime. The required shaders can either be compiled at start-up or loading of the videogame, or at runtime during gameplay when, for example, a character is approaching a particular scene or area which will require specific shaders. Whether pre-compiling all of the shaders on startup or compiling them at runtime during gameplay there is an impact on performance and accordingly potential a detrimental effect on user experience of the video game. A user may be left waiting for a long period of time while all shaders are compiled and loaded at startup or, where they are compiled at runtime this can result in performance glitches such a stuttering when the correct shaders must be compiled before a particular frame can be rendered resulting in a negative impact on gameplay and user experience. In the case of consoles, the hardware is fixed and, as such, there is no requirement to compile the shaders at runtime and instead they can be precompiled and shipped with the video game. However, this does not circumvent the challenges described above.

A typical video game requires a huge number of task-specific shaders and shader variants which are required for rendering any particular scene . Accordingly, there is still a challenge of loading the required compiled shaders from storage into a shader memory usable by the GPU for processing. It is often not possible to load every shader required into the GPU at the same time or, where it is, this places restrictions on the amount of available memory, for example for storing detailed textures and other graphical components for rendering. Therefore, often shaders must be loaded from disk to a shader memory usable by the GPU during gameplay and the same impact on game performance is seen, with stuttering effects as the required shaders must be loaded before frames can be rendered.

One alternative to using a large number of specialist shaders is using a large multi-purpose or "uber shader". Multi-purpose shaders or "uber shaders" are large shader programs which can be used for a wide range of different processing tasks, often by the inclusion of branching in the code that allow decisions to be made at runtime to select different branches of the code and provide different functionalities. Dynamic branching allows for different rendering paths to be taken, for example on depending on different factors such as material properties, object attributes of environmental conditions. The shader code in this case would carry out condition evaluation to determine a set of conditions and accordingly select which rendering path to take. These conditions could be based on, for example, the material being rendered or the position of lights in the scene.

Shader performance is extremely sensitive to this kind of "branchy" code as when different pixels are vertices within a rendering batch take different branches it can lead to divergence in the execution paths, causing parts of the GPU to be idle while others are active, significantly impacting efficiency and throughput. Since threads that are not on the same branch are inactive the processing capacity of the GPU may be significantly underutilised. Uber shaders also require significantly more register meaning less waves can be launched on the GPU. Therefore there are significant performance issues when attempting to use a multi-purpose shader for rendering a wide range of different graphical components within a video game.

The present invention combines the use of multi-purpose or "uber" shaders and specialised task specific shaders to overcome these problems. The method involves initially deploying a multi-purpose shader which is suitable for rendering a wide range of different graphical components within a particular video game. The multi-purpose shader may be used initially to render graphical components when a task-specific shader is not ready and usable by the GPU. Then, while rendering initially with the multi-purpose shader, the method involves determining the required task-specific shader for a particular practical component to be rendered and loading the task-specific shader into memory to be used by the GPU.

When the task specific shader is loaded, rendering can then be carried out using the task-specific shader instead of the multi-purpose shader. In this way, it is not necessary to load every possible task-specific shader for a particular game into the shader memory at the same time but instead one or more frames may be rendered with the multi-purpose shader whilst the task specific shader is loaded. Rendering of subsequent frames can then resume using the task-specific shader. Although, as described above, there may be performance impacts associated with using a multi-purpose or "uber" shader, the worst effects of this can be mitigated using a number of additional features as described below.

In more detail, the method may involve, during gameplay, receiving graphics data for rendering within a particular scene. Based on the graphical components within the scene that must be rendered, a check can be performed to determine whether the correct task specific shader is already present within the shader memory usable by the GPU. For example, when a user moves the player character towards an area of the virtual world which contains water necessitating the use of a water shader for rendering the appearance of water, it is determined that the water shader is required, or is likely to be required. Subsequently a check is performed to determine whether the water shader is present within the memory usable by the GPU. If the water shader is present then no further steps are required and the water shader may be used to render water within the sea when required. However, when it is determined that the task specific shader (i.e. the water shader) is not present the method involves initiating loading of a task-specific shader (the water shader) into the shader memory.

While the check and loading of the task-specific shader is carried out, initially the water may be rendered with a multi-purpose shader already stored in the shader memory. The multi-purpose shader is configured for rendering a wide range of different graphical components . For example, rather than just being configured for rendering water it may also be configured for rendering metal, wood or other materials in addition to water. This may be encoded in the shader by a number of branches providing different processing effects depending on the material required. Such a shader would generally be much larger than a task-specific shader but has the ability of rendering a wide range of different components, albeit with a possible impact on the processing performance of GPU. The multi-purpose shader can therefore be used to render the water while the task-specific shader is loaded into the shader memory. As soon as the task-specific shader has loaded, rendering of subsequent frames can proceed using the specific water shader to render the water within the scene. To achieve this a check may be carried out to determine when a task-specific shader has loaded and, in response, rendering may switch from the multi-purpose shader to rendering with the task-specific shader. In this way, rather than not being able to render frames while the required shader is loaded, a multi-purpose shader can at least render the frames to minimise the impact on performance to the user. This will reduce stuttering effects when frames cannot be rendered and provide smoother gameplay performance as at least the required frames may be rendered, even if it is lesser quality than may be achieved with a task-specific shader.

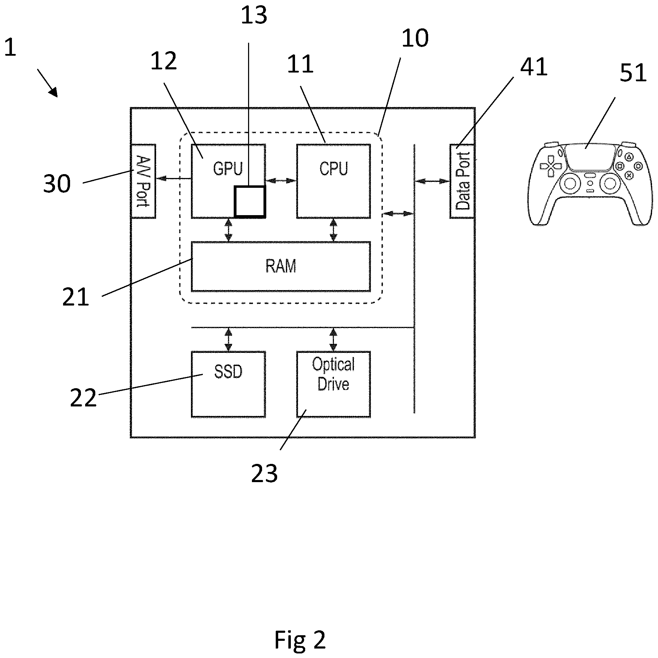

Figure 2 shows an example of a video gaming system 1 usable to implement the methods of the present invention. The system includes a GPU 12 a CPU 11, in this case combined into a combined processing unit 10. In other examples, the CPU could be more separate and not have access to the same shared RAM. The system 1 further includes storage such as an SSD memory 22 or optical drive 23 for storing game data. As in a conventional rendering pipeline, based on the current game state, the CPU 11 generates rendering commands such as draw calls and state changes to send to the GPU 12. These commands specify how objects should be rendered including their position, orientation textures, shades and other rendering parameters. The GPU 12 executes these rendering commands received from the CPU 11 to generate the final image displayed on the screen after output via the AV port 30.

The rendering pipeline may comprise multiple stages such as vertex processing, primitive assembly, rasterization, fragment shading and output merging. The data transfer between CPU 11 and GPU 12 may be managed via APIs with the CPU 11 sending rendering commands and the GPU 12 sending back the rendered frames to be displayed and output by the AV port 30. The active shaders are stored in a memory 13 usable by the GPU, herein referred at the "shader memory". The shader memory may be implemented in a number of different ways and provided by for example the video memory (VRAM) usable by the GPU. In the example of Figure 2 it maybe also stored in the joint RAM 21 usable by the GPU 12 and CPU 11. When a shader is required it must be loaded from storage 22, 23 into the shader memory 13, 21.

As described above, a certain number of task-specific shaders may be loaded into the shader memory 13, 21 on initialisation or at the start of a particular stage of gameplay. They may equally be loaded during gameplay as required, but this results in an impact on performance when frames requiring the shaders to be rendered are not present. As described above, in some cases the shaders may also be compiled at runtime. In this case, the CPU 11 may access the shader source code (for example written in HLSL, GLSL, or SPIR-V). The shader source code may be stored in storage 22, 23 compiled by the CPU 11 into a lower-level representation that can be understood and executed by the GPU 12 with the compiled shader code stored as binary shader files which can then be loaded into the shader memory 13 to be used by the GPU 12.

In other video gaming systems, particularly video game consoles, all shaders may be precompiled and stored in the storage 22, 23. In this case, compilation does not need to be performed and the task relates simply to loading the required shader into the shader memory 13, 21. In the present invention, the multi-purpose shader is stored in the shader memory 13, 21 usable by the GPU 12. When it is determined that a particular task-specific shader is required for rendering a certain graphical object within a scene, the shader memory 13, 21 is checked to determine whether the required task specific shader is present. When it is not present, rendering of the graphical component proceeds using the multiple purpose shader already loaded into memory 13, 21 while the required task specific shader is loaded from storage 22, 23 into the shader memory 13, 21. When it is determined that the task-specific shader has loaded, rendering of the first graphical component resumes using the task-specific shader.

As described above rendering using a large multi-purpose shader can have impacts on GPU performance and the gameplay experience by the user. For example, since using a large shader with multiple branches does not make efficient use the GPU this may reduce the frame rates achievable when rendering using the multiple purpose shader. For this reason, a number of additional features of the invention may be employed to mitigate the worst effects while still achieving the benefits of the present invention (namely the continued smooth gameplay experience even when the required shaders are not present.

In a first example when rendering using the multi-purpose shader, frames may be rendered at a lower resolution to ease the processing requirements placed on the GPU. In particular, when it is determined that the required task specific shader is not present in the shader memory rendering may commence with the multi-purpose shader with a lower resolution than when rendering with the task specific shader. When the task-specific shader has loaded, rendering may then continue at the increased or default resolution. In some examples this changing resolution may be implemented by using dynamic resolution. This can be implemented by using dynamic resolution techniques, as known in the art. In particular, the method may involve monitoring the frame rates and only adjusting the resolution where the frame rate drops below a target framerate, or dynamically adjusting the resolution to target a particular target framerate.

The method then involves rendering the scene at a lower resolution than the native resolution of the display device to allow a target framerate to be maintained. The method may involve, after rendering seen at lower resolution, scaling up the image to fit the native resolution of the display. The dynamic resolution process is preferably adaptive and may respond to dynamically changes in scene complexity, camera movement or GPU load for example. In this way, the impact on the performance of the GPU by using an uber shader is balanced by reducing the processing requirements by dynamically adjusting the resolution. This will result in certain number of frames been rendered a low resolution and displayed to a user, before the target resolution is resumed when the required shader is loaded.

A number of known techniques may be employed to mitigate the noticeable impact of the changing resolution, such as temporal filtering or machine learning based techniques like deep learning super sampling. Alternatively or in addition to adjusting resolution, dynamic level of detail (LOD) techniques may be employed to adaptively adjust the level of detail objects based, for example come out on the distance from the camera. The method involves rendering the first graphical component with a lower level of detail when rendering with the multi-purpose shading and rendering the first graphical component with a greater level of detail with a task-specific shader. The method may further apply frame blending techniques to smooth the transition between rendering with the multi-purpose shader and task-specific shader. Frame blending can be applied when rendering with the multi-purpose shader in which the frame rate may be lower or inconsistent and, alternatively or additionally, it may be applied to smooth the transition between rendering with the multi-purpose shaver and task-specific shader. The technique involves blending multiple consecutive frames to produce combined or intermediate frames. When rendering with the multi-purpose shader, which may result in a lower framerate, blended frames can be created from consecutive frames to produce intermediate frames that appears as a single combination of the original frames. This technique allows the animation to appear smoother with a reduced impact on user experience and a less noticeable change between frames.

The graphical components rendered with a particular task specific shader may refer to a wider different graphical object types such, as different virtual object types appearing within the game, material types, post processing effects or lighting condition types. The multi-purpose shader may be configured specifically for a particular video game, for example based on the types of graphical components that are used. In particular, it can be determined a specific combination of functions of the multi-purpose shader that allow it to provide the widest range of required rendering for a particular video game, for example based on the particular materials or lighting effects that are prevalent within a particular game. The multi-purpose or uber shader can be determined at the development stage by reviewing the task-specific shaders required for a game and combining the functions used most frequently into a single large multi-purpose shader. In other examples it could be determined dynamically monitoring gameplay to determine which task-specific shaders that use the most frequently and incorporating the required rendering processes to those task-specific shaders within a single multi-purpose shader.

In one example the multi-purpose shader can provide rendering of a particular graphical component type or rendering task but applied with different parameters, whereas the task-specific shader can provide rendering of the graphical component type or rendering task with specific fixed parameters. In a video game there are often situations in which the same rendering task may be provided with different effects, for example defining the scope or intensity of an effect. Rather than have separate shaders loaded for every possible increment of the intensity or scope of the effect, a multipurpose shader could be used that can dynamically switch between parameters to apply the rendering task with different parameters. This achieves flexibility but at a cost to GPU performance due to the requirement for the dynamic branches in the code as described above. By rendering with the "dynamic parameter" shader while the "specific parameter" is loading, this allows frames to be rendered correctly at lower performance, while the specific shader is loaded. One example of the use of this is with post processing effects such as motion blur, ambient occlusion, depth of field, Temporal anti-aliasing and supersampling techniques. These may be rendered with different kernel size to adjust the scope and intensity of the effect. The task specific shader could render the postprocessing effect at a specific selected kernel size and the multi-purpose shader could dynamically switch between kernel sizes to achieve the advantages set out above.

## Claims

1. A computer implemented method for rendering graphics data on a video gaming system comprising a GPU, the method comprising:
determining a task-specific shader required for rendering a first graphical component within a scene to be rendered;
rendering the first component of the graphics data with a multi-purpose shader stored in a shader memory usable by the GPU, the multi-purpose shader configured for rendering a plurality of different graphical components;
while rendering with the multi-purpose shader, loading the task-specific shader into the shader memory;
when the task-specific shader has loaded, resuming rendering of the first graphical component within the scene with the task-specific shader.

2. The computer implemented method of claim 1 wherein the method comprises:
performing a check to determine when the task-specific shader has loaded and switching from rendering with the multi-purpose shader to rendering with the task-specific shader when it is determined that the task-specific shader is loaded into the shader memory.

3. The computer implemented method of claim 1 or claim 2 wherein, after determining the task-specific shader required for rendering the first graphical component, the method comprises:
performing a check to determine whether the task-specific shader is present within the shader memory usable by the GPU;
determining that the task-specific shader is not present and, in response, initiating loading of the task-specific shader into the shader memory.

4. The computer implemented method of any preceding claim wherein the multi-purpose shader is configured for a greater number of rendering tasks than the task-specific shader.

5. The computer implemented method of any preceding claim wherein a graphical component comprises one or more of:
a virtual object type, a material property, a lighting technique, a post processing effect..

6. The computer-implemented method of any preceding claim wherein the multipurpose shader comprises a shader program with a plurality of branches for rendering different components of graphics data.

7. The computer-implemented method of any preceding claim wherein the multipurpose shader comprises a shader program with a plurality of dynamic branches allowing for the multi-purpose shader to be dynamically configured at runtime.

8. The computer-implemented method of any preceding claim wherein loading the task-specific shader comprises compiling the task-specific shader while rendering with the multi-purpose shader.

9. The computer-implemented method of claim 8 wherein compiling the task-specific shader comprises:
retrieving shader code for the task-specific shader from storage;
compiling the shader code into machine code executable by the GPU

10. The computer-implemented method of any preceding claim wherein the method comprises:
applying frame blending when switching between rendering with the multi-purpose shader and the task-specific shader.

11. The computer-implemented method of claim 10 wherein the method comprises:
blending a first frame rendered using the multi-purpose shader and a second frame rendered using the task-specific shader to generate a blended frame;
displaying the blended frame when transitioning between using the multi-purpose shader and the task-specific shader.

12. The computer-implemented method of any preceding claim wherein the task specific shader is configured for rendering a post processing effect at a required kernel size and the multipurpose shader is configured for rendering the postprocessing effect at a plurality different kernel sizes.

13. A non-transitory storage medium comprising instructions that when executed by a processor cause the processor to perform the method of any preceding claim.

14. A computer program comprising that when executed by a processor cause the processor to perform the method of any one of claims 1 to 12.

15. A video game system comprising a processor configured to:
determine a task-specific shader required for rendering a first graphical component within a scene to be rendered;
render the first component of the graphics data with a multi-purpose shader stored in a shader memory usable by a GPU, the multi-purpose shader configured for rendering a plurality of different graphical components;
while rendering with the multi-purpose shader, load the task-specific shader into the shader memory;
when the task-specific shader has loaded, resume rendering of the first graphical component within the scene with the task-specific shader.
